(19) Europäisches Patentamt

European Patent Office

Office européen des brevets

(11) **EP 0 560 271 B1**

(12) **EUROPÄISCHE PATENTSCHRIFT**

(45) Veröffentlichungstag und Bekanntmachung des Hinweises auf die Patenterteilung:
23.10.1996 Patentblatt 1996/43

(51) Int. Cl.$^6$: **B60T 8/32**

(21) Anmeldenummer: 93103720.4

(22) Anmeldetag: 09.03.1993

(54) **Antiblockierregelsystem für Kraftfahrzeuge**

Anti-blocking control system for vehicles

Système de régulation d'antiblocage pour véhicules

(84) Benannte Vertragsstaaten:
DE FR GB IT

(30) Priorität: 13.03.1992 DE 4208048

(43) Veröffentlichungstag der Anmeldung:
15.09.1993 Patentblatt 1993/37

(73) Patentinhaber: Fahrzeugtechnik Ebern GmbH
D-96106 Ebern (DE)

(72) Erfinder:
• Roll, Georg, Dr.
W-6056 Heusenstamm (DE)
• Ohm, Heinz-F.
W-6108 Weiterstadt (DE)

(74) Vertreter: Oppermann, Ewald, Dipl.-Ing.
Am Wiesengrund 35
63075 Offenbach (DE)

(56) Entgegenhaltungen:
EP-A- 0 422 515       EP-A- 0 435 184
EP-A- 0 435 227       WO-A-90/14255
WO-A-91/14604         DE-A- 3 221 467
DE-A- 3 326 959       DE-A- 3 417 389
DE-A- 3 530 280       DE-A- 3 841 977
DE-A- 4 034 814

## Beschreibung

Die Erfindung betrifft ein Antiblockierregelsystem nach dem Oberbegriff des Anspruchs 1.

Antiblockiersysteme müssen die Anforderung erfüllen, im Falle einer Panikbremsung die Bremsdrücke aller überbremsten Räder so einzustellen, daß in allen Phasen der Regelbremsung nahezu die physikalisch maximal mögliche Bremskraft genutzt wird.

Ein wesentliches Problem besteht dabei darin, jeweils nach der Ausregelung eines zu großen Radschlupfeinlaufs wieder einen günstigen Druckverlauf zu finden, der einerseits eine möglichst hohe mittlere Bremswirkung erzielt und andererseits aber nicht zu früh wieder einen überbremsungsbedingten Radschlupfeinbruch (nachfolgend auch 'Radgeschwindigkeitseinbruch' oder 'Überbremsung' genannt) provoziert.

Andererseits wird aus Sicherheitsgründen gefordert, daß eine derartige Überbremsung jeweils spätestens ca. 300ms nach Beginn einer Druckaufbauphase (auch 'Wiederbelastungsphase' oder 'Druckrampe' genannt) eintritt, um sicher zu vermeiden, daß das Fahrzeug aufgrund der Blockierschutzregelung unterbremst läuft. Endet die normale Belastungsrampe nach 300ms ohne definitive Radüberbremsung, so wird üblicherweise eine steile Suchrampe durchfahren, die im Falle eines Low-High-Übergangs möglichst schnell den neuen Blockierdruckpunkt finden soll.

Die Suchrampe unterscheidet sich von der normalen Belastungsrampe also durch einen größeren Druckgradienten über der Zeit.

Eine derartige zyklische Einbruchsprovokation führt aber speziell bei Motorrädern zu mangelndem Bremskomfort und unnötig langen Bremswegen.

Es ist deshalb Aufgabe der Erfindung, ein Antiblokkiersystem zu schaffen, welches die zyklische Radüberbremsung vermeidet und trotzdem sicherstellt, daß jedes Rad über möglichst lange Zeiträume in optimalen Schlupfbereichen betrieben wird, so daß etwa die physikalisch maximale Fahrzeugverzögerung bei hohem Regelungskomfort erreicht wird.

Die Lösung der Aufgabe gelingt mit den im kennzeichnenden Teil des Anspruchs 1 angegebenen Merkmalen. Vorteilhafte Weiterbildungen sind in den Ansprüchen 2 bis 7 angegeben.

Durch die Erfindung wird schon in Abhängigkeit der berechneten Fahrzeugverzögerung abgeschätzt, welche Radverzögerung voraussichtlich bald zu einer erneuten Radüberbremsung führen wird. Bei Überschreitung dieser Schwelle erfolgt bereits eine Feinregelung, d. h. Anhalten oder geringe Reduzierung des Radbremsdrucks schon bevor eine echte Überbremsung mit mitkopplungsbehafteten Radblockiertendenzen auftritt.

Eine Druckreduzirung wird erst dann durchgeführt, wenn die Radverzögerung eine relativ zur Fahrzeugverzögerung hohe Schwelle überschreitet und gleichzeitig weitere Zusatzbedingungen erfüllt sind.

In diesem Fall kann mit hoher Sicherheit davon ausgegangen werden, daß der erreichte Radbremsdruck bereits in der Nähe des Blockierdrucks liegt.

Falls die reguläre Maximaldauer von ca. 300ms der normalen Wiederbelastungsrampe nun unmittelbar nach einer derartigen Druckreduzierung abläuft, ist es nicht sinnvoll, nur aufgrund einer willkürlichen Zeitforderung die steile Suchrampe zu aktivieren. Der Zeitpunkt für die Aktivierung der Suchrampe wird daher bei jeder notwendigen Druckreduzierung weiter hinausgeschoben (Rampen-Retriggerung).

Die Steilheit der Suchrampe hängt von der erreichten Fahrzeugverzögerung ab. Bei einer hohen Verzögerung in der Nähe von 1g kann davon ausgegangen werden, daß nur noch eine geringe Steigerung aufgrund eines sich erhöhenden Reibwerts möglich ist. Bei extrem geringer Fahrzeugverzögerung, die auf einen momentan glatten Untergrund schließen läßt, ist ein Übergang zu höheren Reibwerten durchaus denkbar, so daß im Falle fehlender Einbrüche eine hohe Suchrampensteilheit gewählt werden muß, um schnell an das mögliche Druckmaximum zu gelangen.

Die Erfindung soll an einem Ausführungsbeispiel erläutert werden. Es zeigen:

Figur 1      die Funktionsblöcke eines Antiblockiersystems

Figur 2      ein Zeitdiagramm einer typischen ABS-Regelbremsung mit herkömmlichen Systemen

Figur 3      eine typische $\mu$-Schlupfkurve für trockenen Asphalt

Figur 4      die angestrebten Schlupfbereiche bei der Wiederbelastung

Figur 5      die Schlupfvergrößerung bei Druckerhöhung in Abhängigkeit der Nähe des erreichten Schlupfes zum Optimalschlupf

Figur 6      eine Darstellung der Funktionen AMax1, AMax2

Figur 7      eine Darstellung der Funktion DeltaPSuch

Figur 8      eine Schaltung zur Realisierung der adaptiven Wiederbelastungsrampe

Figur 9      ein Zeitdiagramm für eine Feinregelung: Wiederbelastungsrampe mit Druckhalte- und - reduzierungszyklen

Figur 10     ein Zeitdiagramm für Low-High-$\mu$-Übergang: Wiederbelastungsrampe und Suchrampe mit verzögerungsabhängiger Steilheit.

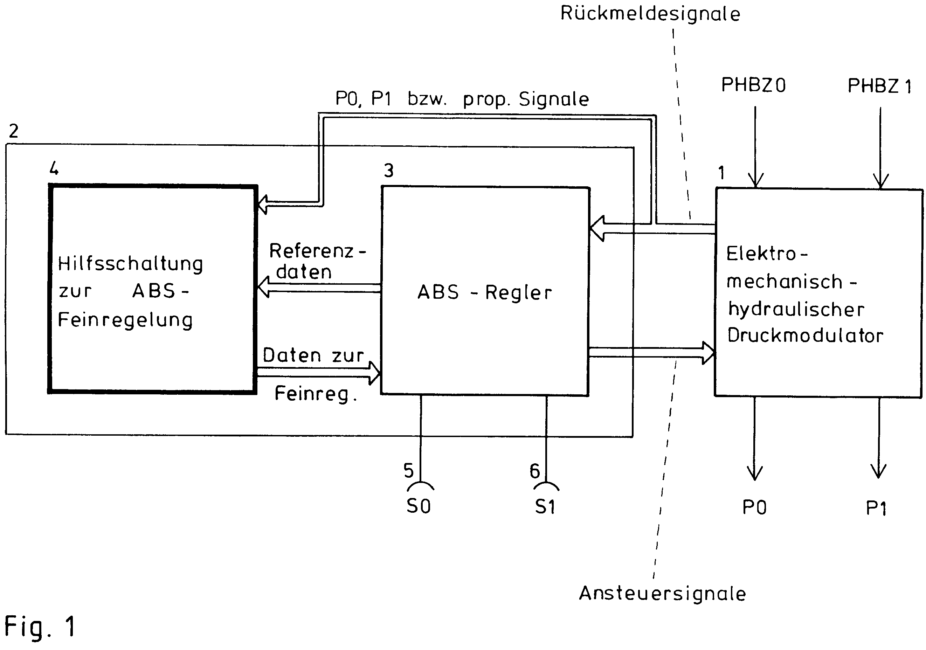

Figur 1 zeigt ein Blockschaltbild eines Antiblockiersystems, bestehend aus einem hydraulisch-elektro-mechanischen Druckmodulator (1) und einer elektronischen Steuereinheit (2), die neben den Komponenten für den ABS-Regler (3) noch eine Hilfsschaltung (4) beinhaltet. Die Realisierung dieser Funktionsblöcke (3,4) kann sowohl durch Spezial-Hardware als auch durch eine softwaremäßige Implementierung erfolgen.

Um die Einbindung der Hilfsschaltung in ein normales Antiblockiersystem darzustellen, werden nachfolgend kurz die funktionalen Zusammenhänge der Blöcke (1,3,4) beschrieben.

Aus Gründen der Einfachheit erfolgt die Darstellung für ein Motorrad mit zwei getrennten Regelkanälen.

Der ABS-Regler (3) bekommt von den induktiven Radsensoren (5,6) Impulsfolgen SO und S1, aus deren Frequenzen er direkt die realen Umfangsgeschwindigkeiten VO und V1 der beiden Räder des Motorrads berechnet. Aus VO und V1 ermittelt der ABS-Regler weitere interne Referenzsignale, wie beispielsweise die Fahrzeug-Referenzgeschwindigkeit VREF und die Fahrzeug-Referenzverzögerung AREF, damit er Überbremsungszustände erkennen und sicher ausregeln kann. Im Eintrittsfall gibt der ABS-Regler (3) Drucksteuersignale an den Druckmodulator (1), so daß dieser die vom Fahrer vorgegebenen Hauptbremszylinderdrücke PHBZO und PHBZ1 reduziert und als Radbremszylinderdrücke PO und P1 zu den beiden Radbremskreisen weiterleitet. Der hier zugrundegelegte Druckmodulator gibt Rückmeldesignale an den ABS-Regler; es handelt sich dabei um Informationen über die eingestellten Bremsdrücke PO und P1, also im Falle eines Plunger-Druckmodulators (s. z. B. DE-OS 35 30 280) um die druckbestimmenden Positionen der Tauchkolben.

Die internen Referenzsignale können von der Hilfsschaltung (4) mitgenutzt werden.

Der ABS-Regler arbeitet nun nach bekannten Grundstrategien die Blockierschutzregelung ab. Parallel dazu erkennt die Hilfsschaltung in den Druckaufbauphasen, ob eine Feinregelung möglich ist und steuert den ABS-Regler (3) dementsprechend mit Steuersignalen an und übergibt Datenwerte an den ABS-Regler, so daß der ABS-Regler seine Grundregelstrategie mit den Daten der Hilfsschaltung verfeinern kann.

ABS-Regler (3) und Hilfsschaltung (4) arbeiten also parallel. Die Grundfunktionen des ABS-Reglers werden hier als bekannt vorausgesetzt und nicht näher beschrieben.

Die praktisch eingesetzten Antiblockiersysteme schalten zyklisch zwischen den Regelungszuständen 'Druckentlastung', 'Druckhalten' und 'Druckaufbau' an jedem Rad um.

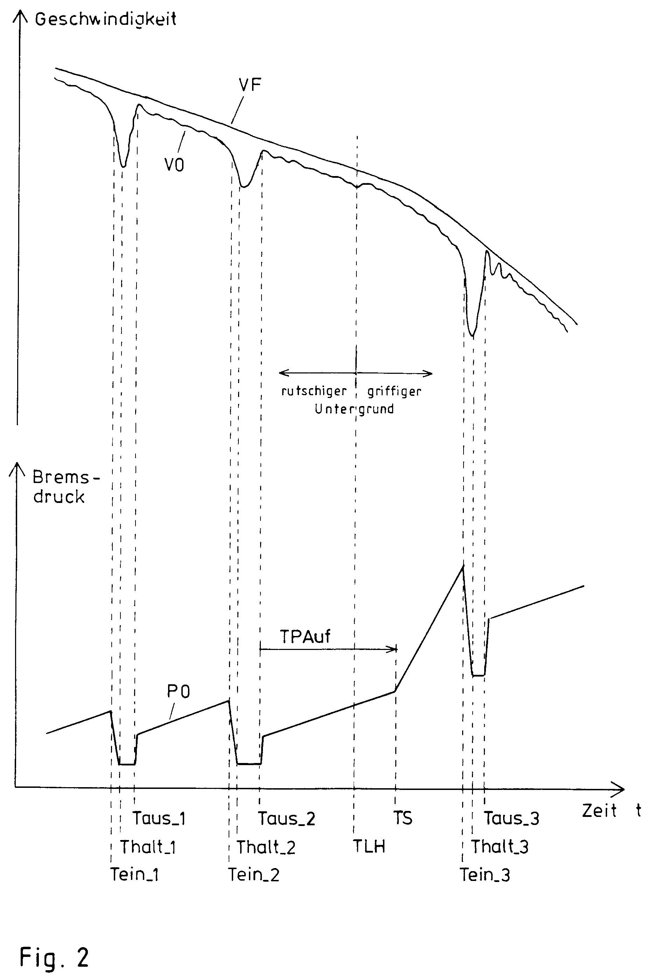

Dazu zeigt Figur 2 eine Blockierschutzregelung auf einem Untergrund mit Reibwertsprung, der von dem betrachteten Rad zum Zeitpunkt TLH erreicht sei.

Eine Druckentlastung findet üblicherweise immer dann statt, wenn das betreffende Rad einen maximal zulässigen Verzögerungswert bei hinreichend hohem Schlupf überschreitet. Diese Situation ist jeweils zu den Zeitpunkten Tein_i gegeben.

Ein Halten des erreichten Drucks erfolgt dann, wenn das Rad aus der vorherigen Verzögerung in die Beschleunigungsphase übergeht, also wieder in Richtung stabiler Schlupfbereiche läuft (tritt auf zu den Zeipunkten Thalt_i). Ein erneuter Druckaufbau findet statt, wenn das Rad wieder eindeutig im stabilen Schlupf läuft (Zeitpunkte Taus_i), wobei zumeist erst ein größerer Drucksprung und danach ein kontinuierlicher Druckaufbau mit konstantem Gradienten erfolgt ('Druckaufbauphase' oder 'Wiederbelastungsphase'), bis ein dadurch erzwungener erneuter Radgeschwindigkeitseinbruch wieder eine Druckentlastungsphase einleitet. Sollte innerhalb einer fest vorgegebenen Rampendauer (TRAuf) kein derartiger Einbruch erfolgen, so wird eine steilere Druckrampe (Suchrampe) gefahren, damit der eingestellte Druck nicht zu lange vom möglichen Maximum entfernt liegt (die Suchrampe beginnt zum Zeitpunkt TS). Bei nahezu allen ABS-Systemen erfolgen darüber hinaus im Rahmen der mechanisch-hydraulischen Möglichkeiten noch feine Druckmodulationen um kleine positive oder negative Beträge, wenn in der Haltephase die Radbeschleunigung zu groß oder zu klein ist. Zusätzlich wird der Druck gehalten, wenn das Rad in der Wiederbelastungsphase in einen zu großen Schlupfbereich einläuft.

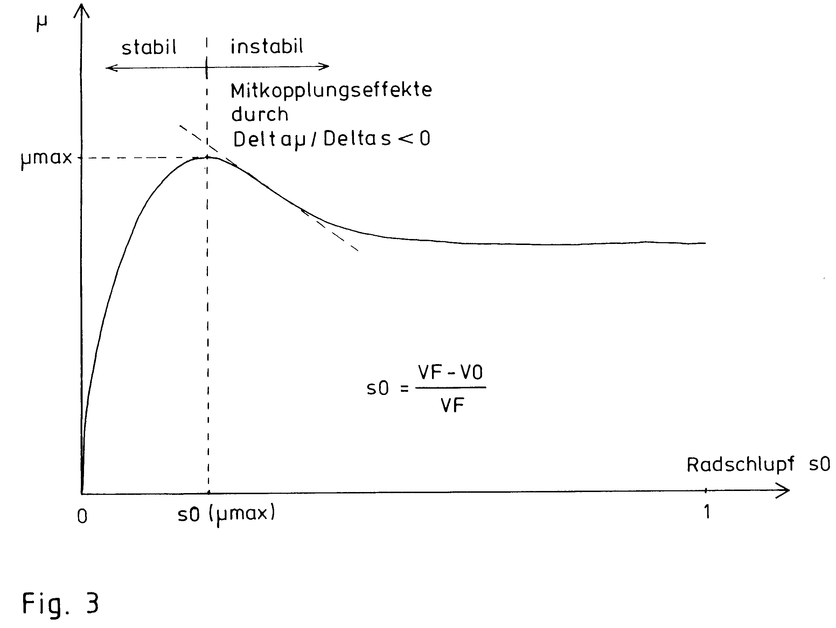

Wenn nach diesem Verfahren ein Radgeschwindigkeitseinbruch erkannt wird, hat das Rad mit hoher Wahrscheinlichkeit bereits die Kuppe der $\mu$-Schlupf-kurve überschritten, so daß der fahrbahnbedingte Radantrieb umso kleiner wird, je weiter das Rad in den instabilen Schlupf einbricht. Um die Radgeschwindigkeit nun wieder auszuregeln, ist eine Entlastung um einen relativ großen Druckbetrag notwendig, um diesem Mitkopplungseffekt entgegenzuwirken (s. Figur 3).

Starke Druckmodulationen wirken vor allem bei Zweiradfahrzeugen unkomfortabel, belasten die Achsmechanik und führen praktisch immer zu Verlusten in der Fahrzeugverzögerung.

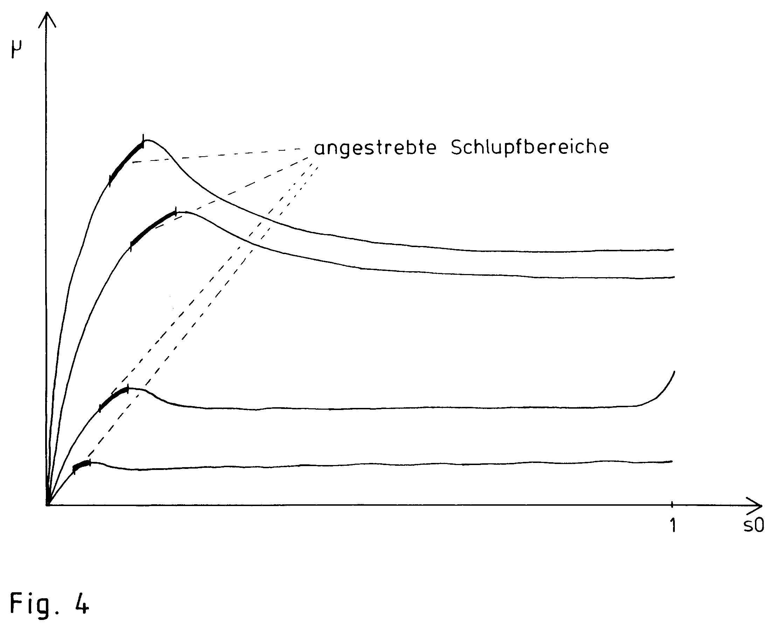

Mit der Erfindung gelingt es also, das jeweilige Rad über möglichst lange Zeiträume in den Wiederbelastungsphasen dicht vor dem Maximum der $\mu$-Schlupf-kurve zu halten (s. Figur 4), ohne ein Einbrechen in den instabilen Schlupfbereich zu provozieren, wobei sichergestellt ist, daß der Reibwert des eingestellten Schlupfes nicht zu weit unter dem Reibwertmaximum (Schlupfkuppe) liegt.

Die Wirkungsweise des erfindungsgemäßen Antiblockierregelsystems wird nachfolgend beschrieben.

Dabei bedeuten die Variablen und Konstanten:

| SO | =Signal vom induktiven Vorderradsensor, das eine Bestimmung der aktuellen Vorderrad-Umfangsgeschwindigkeit ermöglicht) |
|---|---|

| | | | |
|---|---|---|---|
| SI | =Signal vom induktiven Hinterradsensor, das eine Bestimmung der aktuellen Hinterrad-Umfangsgeschwindigkeit ermöglicht) | | Signals. AREF wird als eine derartige gefilterte Fahrzeugverzögerung angenommen) |
| | | μ | =schlupfabhängiger Reibbeiwert zwischen Reifen und Fahrbahn |
| VO | =Vorderrad-Momentangeschwindigkeit (aus den Radsensorsignalen bildet ein ABS-Regler in jedem Regelungszyklus die momentane Radumfangsgeschwindigkeit) | s, sO | =Radschlupf (eines Vorderrades) |
| | | Deltas | =Schlupfänderung aufgrund einer Änderung der Reibungskraft zwischen Reifen und Fahrbahn |
| V1 | =Hinterrad-Momentangeschwindigkeit | | |
| VO_alt | =VO des vorherigen Regelungszyklus | FR | =Reibungskraft zwischen Reifen und Fahrbahn, im nicht überbremsten Radzustand identisch mit der am Radumfang gemessenen Bremskraft |
| AO | =gefilterte Verzögerung/Beschleunigung des Vorderrades (diese wird berechnet, indem der Gradient von VO, gebildet aus der Differenz von VO alt und VO, in den bisherigen Wert von AO anteilig eingerechnet wird) | DeltaFR | =Änderung der Reibungskraft zwischen Reifen und Fahrbahn |
| | | VF | =Tatsächlich Fahrzeuggeschwindigkeit (dem ABS-Regler nicht bekannt) |
| PO | =Radbremszylinderdruck am Vorderrad (dieser Druck wird bei der Regelbremsung vom ABS-Regler eingestellt) | SRampeO | =Signal zum Aktivieren der Suchrampe am Vorderrad (boolesches 1-Bit-Signal, das immer dann logisch '1' gesetzt wird, wenn die steile Belastungsrampe (Suchrampe) gefahren werden soll) |
| P1 | =Radbremszylinderdruck am Hinterrad | | |
| PHBZO | =Hauptbremszylinderdruck des Vorderradkanals | | |
| PHBZ1 | =Hauptbremszylinderdruck des Hinterradkanals | PHaltO | =Signal zum Druckhalten am Vorderrad (boolesches 1-Bit-Signal, das immer dann logisch '1' gesetzt wird, wenn der Radbremsdruck in der Druckaufbauphase angehalten werden soll) |
| VREF | =berechnete Fahrzeug-Referenzgeschwindigkeit (wird aus gefilterten Radgeschwindigkeiten und Plausibilitätsüberlegungen gebildet) | | |
| AREF | =gefilterte Fahrzeug-Referenzverzögerung (zeitliche Ableitung von VREF, die aufgrund der kurzen Regelungszykluszeiten allerdings sehr stark schwankt. Aus diesem Grund erfolgt allgemein eine Filterung dieses | PRedO | =Signal zum Druckreduzieren am Vorderrad (boolesches 1-Bit-Signal, das immer dann logisch '1' gesetzt wird, wenn der Radbremsdruck in der Druckaufbauphase um einen kleinen Betrag reduziert werden soll). |

DeltaPSuchO =Steilheit der Suchrampe (für das Vorderrad); Betrag, um den der Bremsdruck in jedem Regelungszyklus der Suchrampe erhöht wird

DeltaPRedO =Betrag der Druckentlastung bei Überschreitung der Radverzögerungsschwelle AMax2

Tein_i =Zeitpunkt, zu dem innerhalb einer Regelbremsung zum i-tenmal ein überbremsungsbedingter Radgeschwindigkeitseinbruch erkannt wird

POein =Bremsdruck des Vorderrades, bei dem eine Radblockiertentdenz festgestellt wird

POein_i =Bremsdruck des Vorderrades, bei dem zum i-tenmal in einer Regelbremsung eine Radblockiertendenz auftritt

PConst =kleiner konstanter Druckbetrag, der zur Bildung eines Referenzdrucks benötigt wird

Thalt_i =Zeitpunkt, zu dem innerhalb einer Regelbremsung zum i-tenmal eine Druckhaltephase beginnt, das zuvor überbremste Rad also beschleunigt

Taus_i =Zeitpunkt, zu dem innerhalb einer Regelbremsung zum i-tenmal ein Radgeschwindigkeitseinbruch ausgeregelt worden ist

TLH =Zeitpunkt, zu dem das betrachtete Rad einen Reibwertsprung des Untergrunds erreicht

TS =Zeitpunkt, zu dem die Suchrampe aktiviert wird

Th_i =Zeitpunkt, zu dem innerhalb einer Regelbremsung zum i-tenmal ein Druckhalten in einer Druckaufbauphase erfolgt

Tr_i =Zeitpunkt, zu dem innerhalb einer Regelbremsung zum i-tenmal eine feine Druckreduzierung vorgenommen wird, Beginn einer Verlängerung der Druckaufbaurampe

TPAuf =zulässige Zeitdauer des Druckaufbaus, innerhalb der eine erneute Radblockiertendenz erwartet wird

TRMin =minimale Restzeit für den normalen Druckaufbau, falls während des Druckaufbaus eine Druckreduzierung erfolgte

TPAuf', TPAuf'' =Zeitdauer der normalen Druckaufbauphase nach einmaliger (zweimaliger) Verlängerung

AMax1 =Schwelle für die Radverzögerung, bei deren Überschreitung in der Druckaufbauphase ein Druckhalten erfolgt

AMax2 =Schwelle für die Radverzögerung, bei deren Überschreitung in der Druckaufbauphase eine Druckreduzierung erfolgt

DeltaA1, DeltaA2 =Verzögerungsanteile für die Berechnung von AMax1 und AMax2

K1, K2, K3, K4, K5, K6 = Konstanten zur Berechnung der Schwellen DeltaA1 und DeltaA2

K7, K8, K9 =Konstanten zur Berechnung der adaptiven Suchrampenteilheit DeltaPSuchO

K10, K11 =Konstanten zur Berechnung des Betrages der Druckreduzierung DeltaPRedO

JitterO =Anzeigesignal für Vorderradjitter (boolesches 1-bit-Signal, das auf logisch '1' liegt, wenn am Vorderrad starker Jitter festgestellt wird oder kurz vorher festgestellt wurde)

REO =Anzeigesignal für eine Radüberbremsung (boolesches 1-bit-Signal, das auf logisch '1' liegt, wenn am Vorderrad ein instabiler Schlupf vorliegt)

Regelungszyklustakt =Taktsignal, das mit der Zeitdauer eines ABS-Regelungszyklus (hier 8ms) geschaltet wird ==> 125 Hz

1g =Erdbeschleunigung = 9.81 m/s^2

Die beschriebenen Regelmechanismen können separat auf jedes Fahrzeugrad angewendet werden. Dabei kann durch unterschiedliche Konstanteneinstellung berücksichtigt werden, ob ein Vorderrad oder ein Hinterrad geregelt wird. Beim Motorrad wird man generell versuchen, das Hinterrad in tiefere Schlupfbereiche zu ziehen, so daß die Schwellen für das Aktivieren der Feinregelungsmechanismen am Hinterradkanal größer zu wählen sind.

Beim kritischeren Vorderrad können durch Wahl kleinerer Schwellen tiefe Radschlupfeinläufe verhindert werden.

Bei PKWs kann man die stabilitätsbringenden Hinterräder durch entsprechend kleine Schwellen in stabileren Schlupfbereichen betreiben.

Da die Regelmechanismen aber prinzipiell für alle Räder gleichermaßen ablaufen, werden nachfolgend alle Darstellungen aus Gründen der Vereinfachung nur für ein Vorderrad (Radindex O) durchgeführt.

Während des Druckaufbaus in der Wiederbelastungsphase des Rades wird dessen Verzögerungswert laufend mit zulässigen Schwellwerten AMax1 und AMax2 verglichen, welche ihrerseits dynamisch in Abhängigkeit der Bremssituation gebildet werden. Überschreitet die Umfangsverzögerung AO des Rades den Schwellwert AMax1, so wird die Druckanfahrt zunächst nur angehalten.

Falls der größere Schwellwert AMax2 überschritten wird, so erfolgt sogar eine Druckreduzierung um einen kleinen radverzögerungsabhängigen Betrag.

Dabei wird nicht gefordert, daß die Radumfangsgeschwindigkeit VO bereits einen großen Schlupfwert erreicht hat. Es wird sogar davon ausgegangen, daß diese Maßnahme bereits dann wirksam wird, wenn das Rad sich noch im stabilen Schlupfbereich, also vor dem Schlupfkurvenmaximum, befindet. Auf diese Weise können Geschwindigkeitseinbrüche mit hoher Raddynamik, die eine starke Druckabsenkung zur Ausregelung benötigen, häufig vermieden werden.

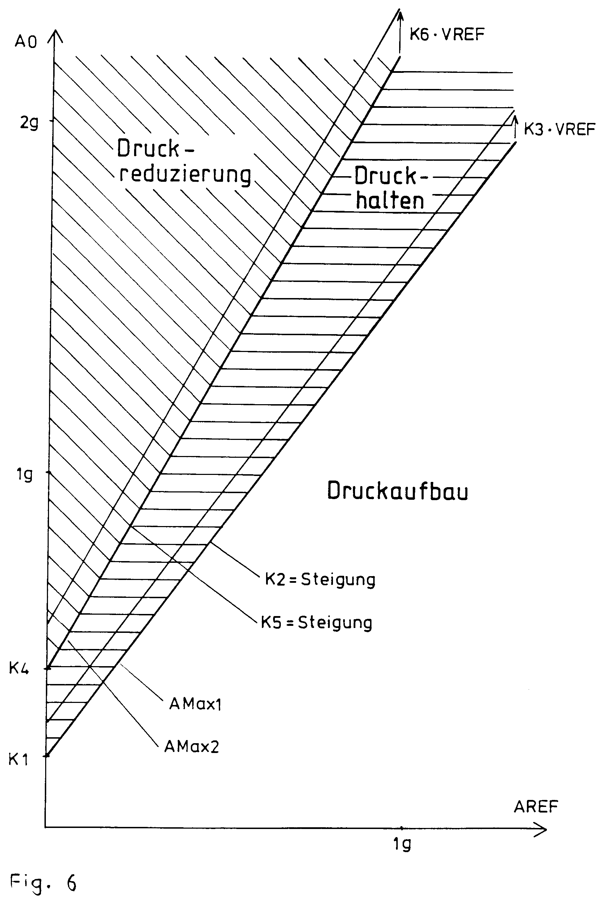

Die Schwellwerte AMax1 und AMax2 sind dabei keine konstanten Werte, sondern werden in Abhängigkeit der erreichten Fahrzeug-Referenzverzögerung berechnet (s. Figur 6):

$$AMax1 = AREF + DeltaA1$$

$$AMax2 = AREF + DeltaA2$$

mit

$$DeltaA1 = K1 + K2 * AREF + K3 * VREF$$

$$DeltaA2 = K4 + K5 * AREF + K6 * VREF$$

K1, K2, K3, K4, K5, K6 fahrzeugspezifisch

Der Vorteil dieser variablen Einstellung der Schwellwerte liegt darin, daß eine effektive Radschlupf-Einbruchsverhinderung auf allen Böden erzielt werden kann.

Nach den obigen Gleichungen wird bereits dann der Radbremsdruck angehalten oder sogar reduziert, wenn die Radgeschwindigkeit mit dem Differenzgradienten DeltaA1 bzw. DeltaA2 von der ermittelten Fahrzeug-Referenzgeschwindigkeit VREF wegdivergiert, ohne daß eine absolute (situationsunangepaßte) Schwelle überschritten werden muß, so daß bei Bremsungen auf rutschigem Untergrund schon relativ flache Schlupfeinläufe die Feinregelungsmaßnahmen auslösen.

In der Praxis zeigt sich, daß tatsächlich die Divergenz zwischen der Fahrzeug- und der Radgeschwindigkeit als Anzeige für einen sich anbahnenden Radblockierzustand maßgeblich ist.

Erschwerend bei der exakten Feststellung einer Geschwindigkeitsdivergenz wirkt sich allerdings die Tatsache aus, daß die Fahrzeug-Referenzgeschwindigkeit VREF ihrerseits aus den Radgeschwindigkeiten VO und V1 gewonnen wird, so daß VREF prinzipiell bei starkem Schlupfeinlauf beider Räder etwas zu steil nach unten gerechnet werden kann und damit die Divergenz kleiner erscheint als sie wirklich ist. Eine entsprechende Filterung bei der Berechnung von VREF, die aber auch für andere Maßnahmen erforderlich ist, wird deshalb hier vorausgesetzt.

Die Einstellung der Konstanten K1 bis K6 muß radspezifisch erfolgen, da gerade beim Motorrad sehr unterschiedliche Anforderungen an die Regelung der beiden Räder gestellt werden. Entscheidend für die Einstellung sind auch die verwendeten Reifenklassen. Bei vorwiegendem Einsatz von Sportreifen mit stark ausgeprägten μ-Schlupfkurvenmaxima sollten die Schwellen zumindest für das Vorderrad relativ klein gewählt werden. Bei mehr auf Komfort ausgerichteten Reifen sollte man die Schwellen so groß wählen, daß die Mechanismen nur in extremen Fällen wirksam werden.

Es besteht ferner die Möglichkeit, eine mehr oder weniger starke Geschwindigkeitsabhängigkeit in die Schwellenberechnung einfließen zu lassen. Damit wird der Tatsache Rechnung getragen, daß bei höheren Geschwindigkeiten stärkere Divergenzen zwischen der Fahrzeug- und den Radgeschwindigkeiten auftreten können, ohne daß dies als Indiz für eine Blockiertendenz gewertet werden müßte. Außerdem wäre ein nicht berechtigtes Halten oder gar leichtes Reduzieren des Bremsdrucks bei hohen Geschwindigkeiten aufgrund der möglichen Bremswegverlängerungen zu gefährlich.

Zudem ist eine Feinregelung im hohen Geschwindigkeitsbereich für eine Komfortverbesserung nur von untergeordneter Bedeutung.

Wie bereits oben erwähnt, erfolgt eine Radbremsdruckreduzierung, wenn die Radverzögerung AO den Verzögerungsschwellwert AMax2 überschreitet. Der Betrag dieser Reduzierung verhält sich proportional zu der Größe des letzten ungefilterten Radgeschwindigkeitsgradienten:

$$DeltaPRedO = K10 * (VO\_alt - VO)$$

Dabei ist VO_alt die Radumfangsgeschwindigkeit VO des vorherigen Regelungszyklus.

Da die Reduzierung nicht beliebige Werte annehmen darf, erfolgt eine Beschränkung auf den Maximalwert K11:

$$DeltaPRedO = Min (K10 * (VO\_alt - VO) , K11)$$

Um beispielsweise bei einem punktuellen Radgeschwindigkeitsgradienten von 3g eine einmalige Druckreduzierung um 1bar vorzunehmen, berechnet man K10 bei einer Regelungszykluszeit von 8ms zu:

$$K10 = 1bar / (3g * 8ms)$$

Die Steigung DeltaPRedO muß natürlich je nach verwendetem Druckmodulator in geeignete Ansteuersignale transformiert werden. Die Steigung DeltaPRedO kann linear in einen zu verfahrenden Wegbereich des Druckkolbens umgerechnet werden.

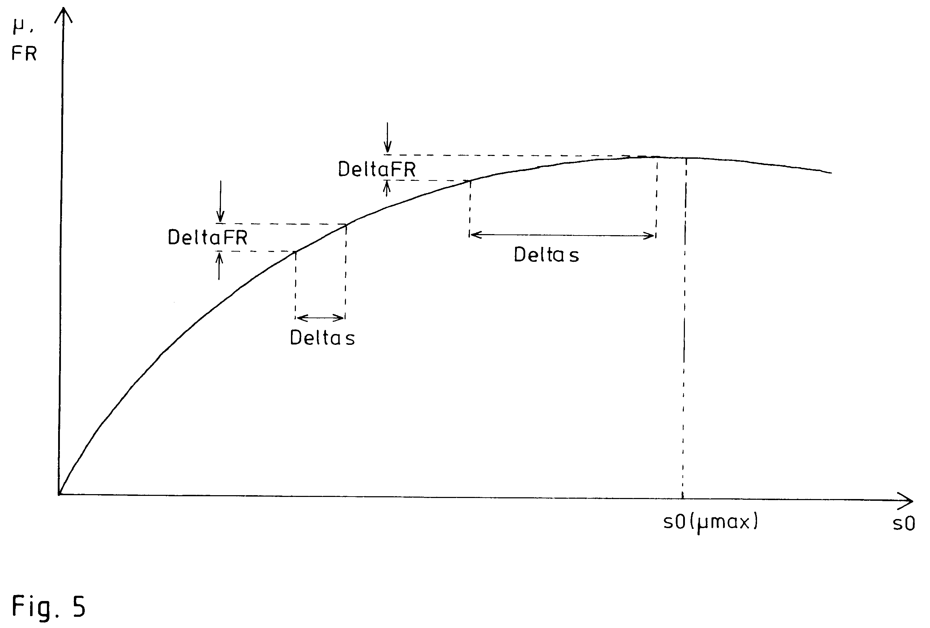

In Figur 5 ist der untere Bereich einer typischen μ-Schlupfkurve bzw. Bremskraft-Schlupfkurve dargestellt.

Es zeigt sich, daß im Bereich sehr kleiner Schlupfwerte bei Erhöhung der Reibungskraft um einen kleinen Betrag DeltaFR der Schlupf auch nur um einen Betrag Deltas ansteigt. In der Nähe der Schlupfkuppe wird Deltas bei gleicher Reibungskraftanhebung wesentlich größer. Das hat zur Folge, daß bei einer Bremsung im Bereich des Reibwertoptimums starke Schlupf- und damit auch Radgeschwindigkeitsschwankungen sowohl in zunehmender als auch in abnehmender Richtung auftreten. Dieser Effekt macht die oben geschriebene Feinregelung möglich, da eine hohe punktelle Radverzögerung trotz langsamer Druckanfahrt als Anzeichen für das Erreichen der Schlupfkuppennähe gewertet wird.

Bei rechtzeitigem Druckhalten bzw. -reduzieren ist es auf nahezu homogenem Untergrund daher möglich, das Rad lange in diesem Optimalbereich zu betreiben, wobei gemäß Figur 5 dazu nur ganz geringe Druckmodulationen erforderlich sind.

Die beschriebenen Regelmechanismen zum Halten und Reduzieren des Bremsdrucks dürfen nur dann durchgeführt werden, wenn sichergestellt ist, daß die hohen Radverzögerungen nicht aufgrund von bodenbedingtem Radjitter kurzzeitig vorgetäuscht werden. Dazu kann der Radjitter mit Hilfe verschiedener bekannter Verfahren ausgemessen werden. Hier wird davon ausgegangen, daß der eigentliche ABS-Regler (3) eine Jitterausmessung durchführt und der Hilfsschaltung (4) über eine logische '1' am Signal JitterO anzeigt, daß noch eine Radunruhe vorliegt. In diesem Fall erfolgt keine Feinreglung.

Um eine weitere Sicherheit zu schaffen, daß eine Feinregelung berechtigt ist, kann man zusätzlich die Forderung stellen, daß der aktuelle Radbremsdruck zumindest wieder annähernd den vorherigen Radblockierdruck erreicht hat und somit unter homogenen Verhältnissen davon ausgegangen werden kann, daß das Rad wieder nahe am Blockierdruck betrieben wird.

Wenn innerhalb der Wiederbelastungsrampe eine leichte Druckreduzierung aufgrund einer zu hohen Radverzögerung notwendig war, wird gleichzeitig die noch verbleibende Laufzeit der Wiederbelastungsrampe auf eine minimale Restzeit TRMin verlängert, falls diese bereits unterschritten ist. Diese Maßnahme ist deshalb sinnvoll, da die Notwendigkeit der Druckreduzierung ein Indiz dafür ist, daß der erreichte Radbremsdruck ganz dicht beim Blockierdruck, also dem maximal sinnvollen Druck liegt, so daß die flache Belastungsrampe durchaus noch für eine gewisse Minimaldauer gefahren werden kann, ohne daß eine Unterbremsung befürchtet werden müßte. In einem solchen Fall wäre ein baldiges Aktivieren der steilen Suchrampe unsinnig.

Hier wird davon ausgegangen, daß bei Auftreten einer einzelnen punktuellen Druckreduzierung eine konstante minimale Restzeit TRMin für die normale Druckaufbaurampe von etwa 80ms eingestellt wird. Sollte die reguläre Restdauer allerdings noch größer sein als TRMin, so bleibt die Restzeit unverändert, so daß diese Maßnahme grundsätzlich nur phasenverlängernd wirken kann.

Um sicherzustellen, daß auf rutschigem, leicht unebenem Untergrund mit anschließendem Übergang zu höheren Reibwerten keine deutliche Unterbremsung aufgrund der verzögerten Einschaltung der Suchrampe eintreten kann, ist es auch möglich, die Verlängerung der normalen Druckaufbauphase nur dann zu erlauben, wenn wenigstens eine minimale Fahrzeugverzögerung von beispielsweise 0.3g überschritten ist. Es erfolgt also eine ereignisbedingte Verlängerung der flachen Wiederbelastungsrampe (Rampen-Retriggerung).

Nach Ablauf der Zeitdauer für die normale Wiederbelastungsrampe wird sicherheitshalber eine i.a. deutlich steilere Suchrampe gefahren, um nun möglichst schnell den aktuellen Radblockierdruck zu erreichen.

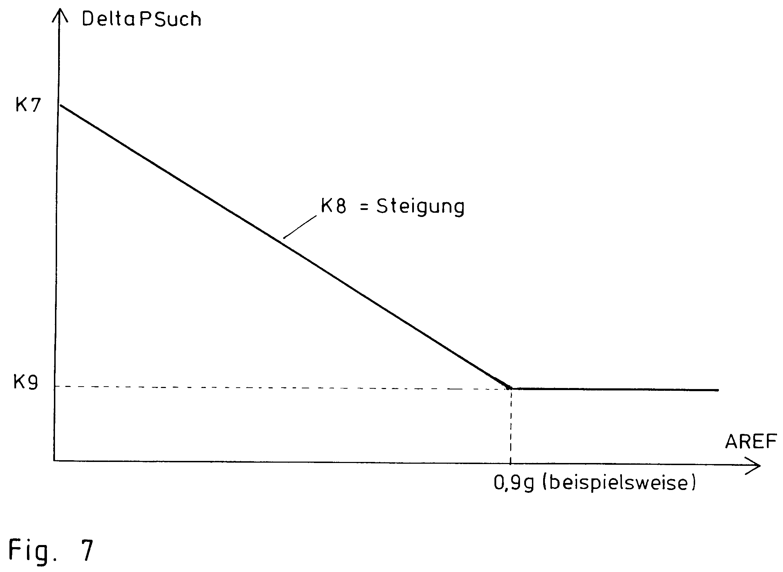

Die Steilheit dieser Rampe sollte sinnvollerweise nicht konstant gewählt werden, da nur bei geringer Fahrzeugverzögerung noch eine deutliche Steigerung aufgrund einer möglichen Reibwerterhöhung erwartet werden kann. Um in solchen Fällen nicht zu unterbremsen, muß die Suchrampensteilheit also groß sein. Wenn die aktuelle Fahrzeugverzögerung jedoch bereits in der Nähe des physikalisch maximal möglichen Wertes von ca. 1g liegt, kann keine große Steigerung mehr erwartet werden, so daß auch der eingestellte Bremsdruck nicht weit vom Blockierdruck entfernt sein kann. Folglich muß keine steile Rampe gefahren werden, um schnell an den optimalen Druckpunkt zu gelangen. Aus diesen Überlegungen resultiert eine Suchrampensteilheit, die direkt linear von der Fahrzeugverzögerung abhängt (adaptierte Steilheit der Suchrampe) (s. Figur 7):

$$DeltaPSuchO = K7 - K8 * AREF$$

Das berechnete DeltaPSuchO wird letztlich noch auf einen Minimalwert K9 begrenzt, falls dieser aufgrund einer extremen Verzögerung (Bergauf-Bremsung auf trockenem Asphalt) unterschritten werden sollte:

$$DeltaPSuchO >= K9$$

Wenn die Fahrzeugverzögerung bei Bremsungen auf glattem Untergrund sehr gering ist, AREF also gegen O strebt, so wird DeltaPSuchO praktisch nur durch den Basiswert K7 bestimmt. Dieser sollte so gewählt werden, daß bei einem Extremübergang von Reibwert $\mu$ = O auf $\mu$ = 1 eine bestimmte Druckaufbauzeit (von beispielsweise 500ms) nicht überschritten wird.

Unter der Annahme, daß der Blockierbremsdruck eines Motorradvorderrades auf einem Untergrund mit $\mu$ = 1 ca. 25bar beträgt, ergibt sich bei einer Regelungszyklusdauer von 8ms:

$$K7 = 25bar * 8ms / 50ms = 0.4bar$$

Wenn die Suchrampensteilheit DeltaPSuchO für AREF = 1g nur noch einen Restwert von beispielsweise 0.04bar annehmen soll, so ergibt sich daraus für K8:

$$K8 = 0.36bar / 1g$$

Damit DeltaPSuchO bei Extremverzögerungen nicht unter diesen Wert sinkt, muß für die Minimalsteigung K9 gelten:

$$K9 = 0.04bar$$

Für die Ansteuerung des Druckmodulators, um den Druckaufbau mit dem Gradienten DeltaPSuchO zu verwirklichen, gilt das bereits oben in bezug auf DeltaPRedO Gesagte.

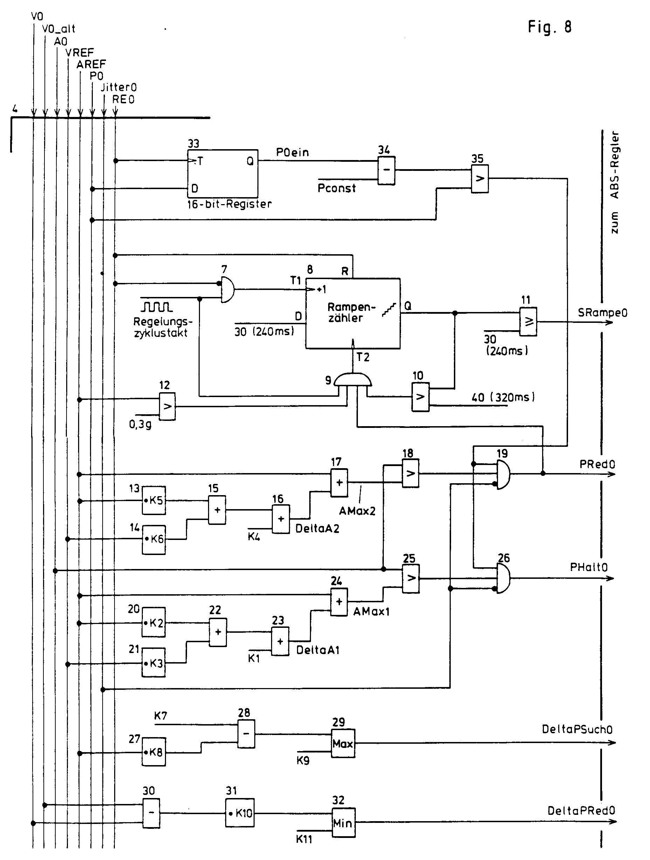

Figur 8 zeigt ein erfindungsgemäßes Realisierungsbeispiel.

Die Hilfsschaltung (4) bekommt interne Refernzsignale, die der ABS-Regler (3) generiert und selbst auch benötigt. Da hier beispielhaft nur das Vorderrad betrachtet wird, sind dies die Fahrzeug-Referenzgeschwindigkeit VREF, die Fahrzeug-Referenzverzögerung AREF, die Vorderradgeschwindigkeit VO, des vorherigen Regelungszyklus VO_alt, die gefilterte Vorderradverzögerung AO, der Vorderradbremsdruck PO (bzw. die Vorderrad-Druckkolbenstellung bei Plunger-Modulatoren), ein Jitteranzeigesignal JitterO sowie ein Signal REO, das anzeigt, ob das Vorderrad gerade im instabilen Schlupf läuft und daher eine Ausregelung erfolgt.

Die Hilfsschaltung (4) erzeugt anhand dieser Signale ihrerseits Steuersignale und Daten, die vom ABS-Regler (3) zur Realisierung der Feinregelung benötigt werden. Es handelt sich dabei um die Signale SRampeO zum Starten der Suchrampe, PHaltO zum Druckhalten und PRedO zum Druckreduzieren während der Druckaufbauphase sowie um die 8-bit-Datenwörter DeltaPSuchO und DeltaPRedO. Für den Fall, daß die Hilfsschaltung (4) eine Suchrampe aktiviert, gilt der Wert von DeltaPSuch als der Druckbetrag, um den der ABS-Regler im aktuellen Regelungszyklus den Bremsdruck des Vorderradkanals erhöhen muß. Wenn das Signal PRedO gesetzt ist, stellt DeltaPRedO den Druckbetrag dar, um den der ABS-Regler den Vorderradbremsdruck reduzieren muß.

Ein wesentliches Element für die Einstellung des Druckaufbaugradienten ist der Rampenzähler (8). Es handelt sich dabei um einen 8-Bit-Zähler, der durch positive Signalflanken am T1-Eingang um 1 inkrementiert und durch einen '1-Pegel' am R-Eingang auf den Stand 0 zurückgesetzt wird. Eine positive Signalflanke am T2-Eingang bewirkt die Übernahme des am D-Eingang anliegenden Wertes als aktuellen Zählerstand. Dieser erscheint nach außen auf dem Q-Ausgang.

Immer wenn ein überbremsungsbedingter Radgeschwindigkeitseinbruch auftritt, liegt das Signal REO auf logisch '1' und setzt den Rampenzähler (8) ständig auf den Initialwert 0. Nach der Ausregelung der Überbremsung beginnt die Druckaufbauphase, und das Signal REO wird '0'. Dadurch gelangt der Regelungszyklustakt über das UND-Gatter (7) auf den T1-Eingang des Zählers, dessen Stand nun mit jedem Regelungszyklus um 1 inkrementiert wird. Wenn 40 Reglungszyklen (von jeweils 8ms) in der Druckaufbauphase vergangen sind, ohne daß eine erneute Radüberbremsung aufgetreten ist, so liefert der Vergleicher (10) eine logische '1' an seinem Ausgang und schaltet damit das Signal SRampeO auf '1', so daß dem ABS-Regler mitgeteilt wird, daß nun die steile Suchrampe gefahren werden muß. Regulär läuft also für eine Zeitdauer von etwa 40 * 8ms = 320ms die Druckaufbaurampe mit einem Druckgradienten, den der ABS-Regler entweder konstant vorgibt oder berechnet.

Diese Funktion ist nun noch um einen Regelmechanismus zur Verlängerung der Aufbaurampenzeit ergänzt. Wie oben beschrieben, soll die normale Druckaufbauphase noch für eine minimale Restzeit TRMin aufrechterhalten werden, falls die Hilfsschaltung erkannt hat, daß in der Druckaufbauphase eine leichte Druckreduzierung zwecks Feinregelung erforderlich ist.

In diesem Fall wird das Steuersignal PRedO (s.u.) auf logisch '1' gesetzt, so daß über das UND-Gatter (9) der Regelungszyklustakt auf den T2-Eingang des Rampenzählers (8) gelangen kann, wodurch der Zählerstand wieder auf den am D-Eingang anliegenden Konstantwert 30 zurückgesetzt wird. Dies bedeutet, daß der Vergleicher (10) nun erst nach weiteren 10 Regelungszyklen die Suchrampe aktiv schalten kann. Die Übernahme des Zählerstands 30 soll allerdings nur dann erfolgen, wenn der aktuelle Zählerstand bereits 30 überschritten hat, da sonst eine Verkürzung der Druckaufbauphase bzw. eine zu frühe Aktivierung der Suchrampe erfolgen würde. Deshalb sperrt der Vergleicher (11) das UND-Gatter (9), wenn der Zählerstand noch kleiner ist als 30. Weiterhin soll kein Hinauszögern der Suchrampe erfolgen, falls die Fahrzeug-Referenzverzögerung AREF einen zu kleinen Wert annimmt. Dies wird durch den Vergleicher (12) geprüft, der das UND-Gatter (9) ebenfalls sperrt, falls AREF beispielsweise 0.2g unterschreitet.

Wenn die Suchrampe letztlich doch aufgrund fehlender Radblockiertendenzen gestartet wird (SRampeO = '1') so übernimmt der ABS-Regler als Steilheit für diese Druckrampe den Wert DeltaPSuch, der über die Komponenten (27), (28), (29) gemäß der oben beschriebenen Funktion berechnet wird, indem der Multiplizierer (27) AREF mit einem Umrechnungsfaktor K8 normiert, der Subtrahierer (28) diesen Wert von der Maximalsteigung K7 abzieht und der Maximumbilder (29) diese Differenz auf die Minimalsteigung K9 begrenzt.

Die Komponenten (20-26) prüfen, ob während der Druckaufbauphase die gefilterte Radverzögerung AO den Schwellwert AMax1 überschreitet. Dazu bilden die Konstantenmultiplizierer (20) und (21) sowie die Addierer (22), (23) und (24) die AMax1-Funktion. Wenn die Radverzögerung AO den Wert von AMax1 überschreitet, schaltet der Vergleicher (25) eine '1' auf das UND-Gatter (26), welches genau dann das Signal PHaltO an seinem Ausgang auf '1' setzt, wenn zusätzlich kein gravierender Radjitter vorliegt (JitterO = '0') und die Komponenten (33), (34) und (35) feststellen, daß der erreichte Druck wieder in der Nähe des vorherigen Radblockierdrucks liegt. Dazu speichert das 16-bit-Register (33) den Druckwert PO, der exakt zu dem Zeitpunkt ansteht, wo das Signal REO von '0' auf '1' wechselt. Dies ist genau dann der Fall, wenn der ABS-Regler eine Radblockiertendenz eindeutig feststellt. Der abgespeicherte Wert POein wird durch den Subtrahierer (34) noch um einen kleinen Konstantbetrag Pconst reduziert. Wenn der aktuelle Bremsdruck PO nun den Referenzwert POein - Pconst überschreitet, also wieder ein hinreichend hoher Radbremsdruck vorliegt, schaltet der Vergleicher (35) seinen Ausgang auf '1' und erlaubt damit über das UND-Gatter (26) das Setzen des Signals PHaltO.

Durch dieses Signal wird der ABS-Regler veranlaßt, den Bremsdruck PO anzuhalten, obwohl regulär die Druckaufbauphase aktiv ist.

Gleichzeitig prüfen die Komponenten (13-19), ob während der Druckaufbauphase die gefilterte Radverzögerung AO den größeren Schwellwert AMax2 überschreitet. Dazu bilden die Konstantenmultiplizierer (13) und (14) sowie die Addierer (15), (16) und (17) die AMax2-Funktion.

Wenn die Radverzögerung AO den Wert von AMax2 überschreitet, schaltet der Vergleicher (18) eine '1' auf das UND-Gatter (19), welches genau dann das Signal PRedO an seinem Ausgang auf '1' setzt, wenn wiederum kein gravierender Radjitter vorliegt und der Druck PO wieder ausreichend hohe Werte angenommen hat.

Wenn das Signal PRedO durch eine logische '1' dem ABS-Regler anzeigt, trotz der aktiven Druckaufbauphase den Bremsdruck geringfügig zu reduzieren, so übernimmt der ABS-Regler den Wert DeltaPRedO als den Betrag für die Druckreduzierung. Dieser 8-bit-Wert wird durch die Komponenten (30),(31) und (32) gemäß der oben beschriebenen Funktion aus dem punktuellen Radgeschwindigkeitsgradienten gebildet, indem der Subtrahierer (30) die aktuelle Radgeschwindigkeit VO von der Radgeschwindigkeit des vorherigen Regelungszyklus VO_alt subtahiert, der Multiplizierer (31) die Differenz mit einem Umrechnungsfaktor K10 normiert und der Minimumbilder (32) den Wert auf einen Maximalwert K11 begrenzt.

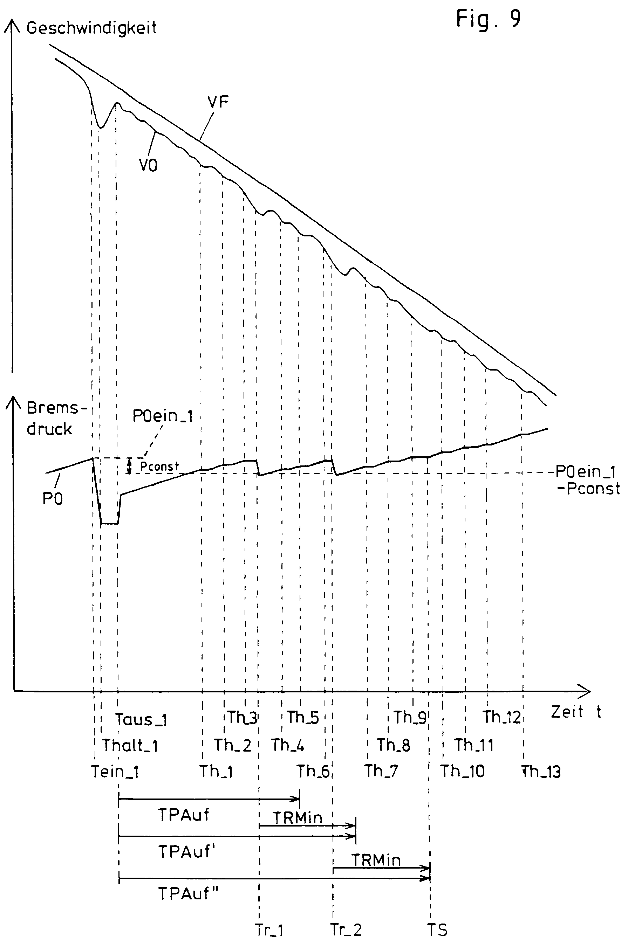

Figur 9 zeigt beispielhaft einen Ausschnitt einer ABS-Regelbremsung, in der die hier beschriebenen Regelmechanismen von Feinregelung und Hinauszögerung der Suchrampenaktivierung wirksam werden. Da der ABS-Regler keinen gravierenden Radjitter feststellt, darf in der Druckaufbauphase eine Feinregelung erfolgen, sobald PO den Wert POein - PConst überschreitet. Zu den Zeitpunkten Tr_1 und Tr_2 wird der Bremsdruck PO trotz aktiver Druckaufbauphase um kleine Beträge reduziert. Das Rad wird dabei - wie der schwache Schlupfkuppenjitter zeigt - dicht am Schlupfkurvenmaximum gefahren.

Die Dauer der normalen Druckaufbauphase wird zu diesen beiden Zeitpunkten jeweils so verlängert, daß jeweils noch eine Restzeit von TRMin verbleibt. Auf diese Weise wird die Gesamtdauer der Druckaufbaurampe von TPAuf zunächst auf TPAuf' und später auf TPAuf" verlängert, und der optimale Bremszustand bleibt lange erhalten.

Nach dem Zeitpunkt TS wird schließlich doch die Suchrampe aktiviert. Deren Steilheit ist aber nicht größer als die normale Rampensteigung, da in dem gezeigten Beispiel schon eine sehr hohe Fahrzeugverzögerung im Grenzbereich erlangt wurde.

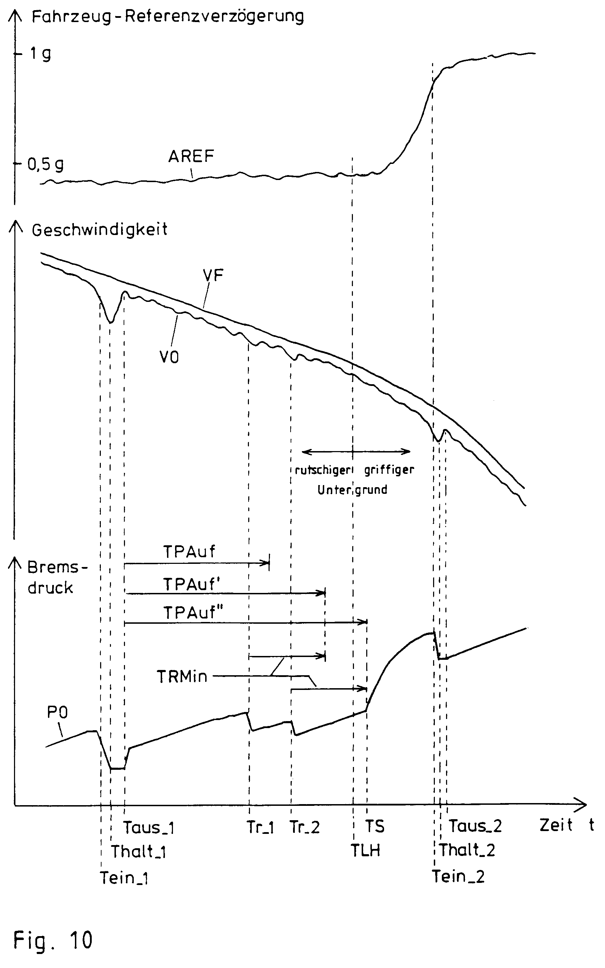

Figur 10 stellt eine ABS-Regelbremsung auf einem Untergrund mit positivem Reibwertsprung dar. Da innerhalb der Druckaufbauphase, beginnend mit Taus_1 innerhalb der verlängerten Druckaufbauzeit keine Radblockiertendenz erkennbar ist, wird zum Zeitpunkt TS die Suchrampe aktiviert. Wegen der geringen Fahrzeug-Refernzverzögerung AREF ist die Steilheit der Rampe zunächst sehr groß. Durch den steilen Druckanstieg und den gut haftenden Boden nimmt die Verzögerung dann ebenfalls stark zu. Um im folgenden nicht einen mit hoher Dynamik provozierten Radblockiervorgang zu bekommen, wird der Druckaufbaugradient durch das wachsende AREF ständig verringert, so daß der optimale Druckpunkt (neuer Radblockierdruck) letztlich mit geringer Dynamik angefahren wird. Die Radblockiertendenz kann dann durch geringe Druckmodulation zum Zeitpunkt Tein_2 beseitigt werden.

**Patentansprüche**

1. Antiblockierregelsystem für Kraftfahrzeuge, bestehend aus induktiven Sensoren (5,6), einem ABS-Regler (3), der aus den Signalen der Sensoren Rad-Überbremsungszustände erkennt und entsprechende Ansteuersignale erzeugt, und einem Druckmodulator (1), der durch die Ansteuersignale veranlaßt wird, die Bremsdrücke an den Fahrzeugrädern einzustellen, wobei an jedem Rad zyklisch 3 Druckeinstellphasen durchlaufen werden, so daß bei einer erkannten Überbremsung jeweils eine Druckreduzierung stattfindet, bei einer wieder eintretenden hinreichenden Radbeschleunigung ein Druckhalten ausgeführt wird und nach einem Einlauf des Rades in einen stabilen Schlupfbereich wieder ein Druckaufbau erfolgt, bis eine erneute Überbremsung wieder eine Druckreduzierungsphase einleitet, und die Steilheit des Druckaufbaus dann deutlich vergrößert wird, falls der Druckaufbau innerhalb einer vorgegebenen Zeitdauer TPAuf nicht zu einer Überbremsung des Rades geführt hat, dadurch gekennzeichnet, daß der ABS-Regler (3) mit einer zusätzlichen internen Hilfsschaltung (4) versehen ist, die anhand der gemessenen Radverzögerungen und der berechneten Fahrzeug-Referenzverzögerungen AREF adaptiv zu den physikalischen Gegebenheiten den normalen Druckmodulationen eine Druck-Feinmodulation überlagert, indem die Hilfsschaltung (4) für jedes geregelte Rad ein Druckhaltesignal erzeugt, wenn die Radverzögerung größer ist als die um eine Schwelle DeltaA1 erhöhte Fahrzeug-Referenzverzögerung und ein Druckreduzierungssignal erzeugt, wenn die Radverzögerung größer wird als die um eine Schwelle DeltaA2 erhöhte Fahrzeug-Referenzverzögerung bei DeltaA2 > DeltaA1, wodurch der ABS-Regler den Bremsdruck des betreffenden Rades auch dann schon anhält oder sogar reduziert, wenn sich die Radgeschwindigkeit noch im stabilen Schlupfbereich befindet, daß die Hilfsschaltung (4) den Zeitpunkt TS für das Aktivieren der Suchrampe bei fehlender Radblockiertendenz immer dann hinausschiebt, wenn während des Druckaufbaus ein Druckentlastungssignal gegeben wurde, und daß die Hilfsschaltung (4) in Abhängigkeit der erreichten Fahrzeug-Referenzverzögerung AREF laufend eine variable Steilheit DeltaPSuch für die Suchrampe berechnet, wobei die Steilheit mit zunehmendem AREF abnimmt.

2. Antiblockierregelsystem nach Anspruch 1, dadurch gekennzeichnet, daß die Hilfsschaltung (4) die Schwellen DeltaA1 und DeltaA2 abhängig von der berechneten Fahrzeug-Referenzverzögerung AREF berechnet.

3. Antiblockierregelsystem nach den Ansprüchen 1 und 2, dadurch gekennzeichnet, daß die Hilfsschaltung (4) die Schwellen DeltaA1 und DeltaA2 zusätzlich abhängig von der berechneten Fahrzeug-Referenzgeschwindigkeit VREF berechnet, wobei DeltaA1 und DeltaA2 linear oder progressiv mit VREF anwachsen.

4. Antiblockierregelsystem nach den Ansprüchen 1 bis 3, dadurch gekennzeichnet, daß derjenige Radbremsdruck als Referenzdruck abgespeichert wird, bei dem das betrachtete Rad eine Blockiertendenz zeigt, und daß ein Druckhalten trotz Überschreitung der Schwelle DeltaA1 oder ein Druckreduzieren trotz Überschreitung der Schwelle DeltaA2 nur dann durchgeführt wird, wenn zusätzlich erfüllt ist, daß der eingestellte Bremsdruck den Referenzdruck bereits wieder annähernd erreicht bzw. schon überschritten hat.

5. Antiblockierregelsystem nach den Ansprüchen 1 bis 4, dadurch gekennzeichnet, daß ein Druckhalten trotz Überschreitung der Schwelle DeltaA1 oder ein Druckreduzieren trotz Überschreitung der Schwelle DeltaA2 nur dann durchgeführt wird, wenn zusätzlich erfüllt ist, daß kein Schlechtwegfall vorliegt, also schon eine bestimmte Zeit seit dem letzten erkannten Radjitter vergangen ist.

6. Antiblockierregelsystem nach Anspruch 1, dadurch gekennzeichnet, daß das Vergrößern von TPAuf nach einer Druckreduzierung nur dann erfolgt, wenn gleichzeitig die Fahrzeug-Referenzverzögerung AREF eine minimale Schwelle von beispielsweise 0.3g überschreitet.

7. Antiblockierregelsystem nach den Ansprüchen 1 bis 6, dadurch gekennzeichnet, daß die Hilfsschaltung (4) software-mäßig auf dem ABS-Regler (3) implementiert ist.

**Claims**

1. An anti-lock control system for motor vehicles, comprising inductive sensors (5, 6), an ABS controller (3) which recognises wheel overbraking conditions from the signals of the sensors and creates corresponding control signals, and a pressure modulator (1) which is triggered by the control signals to set the braking pressures on the vehicle wheels, wherein for each wheel there are 3 cyclical pressure setting phases so that pressure reduction occurs when overbraking has been recognised, pressure is maintained once an adequate wheel acceleration obtains and pressure build-up is initiated once the wheel has entered a stabile slip range until overbraking again triggers a pressure reduction phase and the steepness of the pressure build-up then increases markedly if the pressure build-up within a predefined time period "TPAuf" has not resulted in overbraking of the wheel, characterised in that the ABS controller (3) is provided with an additional internal auxiliary circuit (4) which superimposes a fine pressure modulation on the normal pressure modulations on the basis of the measured wheel decelerations and the calculated vehicle reference decelerations AREF adaptive to the physical conditions, wherein the auxiliary circuit (4) generates a pressure holding signal for each controlled wheel if the wheel deceleration is greater than the vehicle reference deceleration increased by a threshold DeltaA1 and generates a pressure reduction signal if the wheel deceleration is greater than the vehicle reference deceleration increased by a threshold DeltaA2 where DeltaA2 > DeltaA1, as a result of which the ABS controller maintains the braking pressure value for the wheel in question or even reduces it if the wheel speed is still in the stabile slip range, and that the auxiliary circuit (4) always extends the time point TS for the activation of the search ramp in the absence of a wheel-locking tendency if a pressure relief signal has been generated during pressure build-up, and that the auxiliary circuit (4) continually calculates a variable steepness "DeltaPSuch" as a function of the attained vehicle reference deceleration AREF, whereby the steepness decreases with increasing AREF.

2. An anti-lock control system according to claim 1, characterised in that the auxiliary circuit (4) calculates the thresholds DeltaA1 and DeltaA2 depending on the calculated vehicle reference deceleration AREF.

3. An anti-lock control system according to claim 1 and claim 2, characterised in that the auxiliary circuit (4) calculates the thresholds DeltaA1 and DeltaA2 additionally depending on the calculated vehicle reference speed VREF, whereby DeltaA1 and DeltaA2 increase linearly or progressively with VREF.

4. An anti-lock control system according to claims 1 to 3, characterised in that the wheel braking pressure at which the wheel in question exhibits a locking tendency is stored as the reference pressure and that the pressure is maintained despite the threshold DeltaA1 being exceeded or the pressure is reduced despite the threshold DeltaA2 being exceeded only when, in addition, the condition is satisfied that the set braking pressure has again nearly reached or already exceeded the reference pressure.

5. An anti-lock control system according to claims 1 to 4, characterised in that pressure is maintained despite the threshold DeltaA1 being exceeded or the pressure is reduced despite the threshold DeltaA2 being exceeded only when, in addition, the condition is satisfied that there is no poor road surface, ie, a specific time period has elapsed since the last recognised wheel jitter.

6. An anti-lock control system according to claim 1, characterised in that the increase in TPAuf following pressure reduction is only executed if at the same time the vehicle reference deceleration AREF exceeds a minimal threshold of, for instance, 0.3g.

7. An anti-lock control system according to claims 1 to 6, characterised in that the auxiliary circuit (4) is implemented as software on the ABS controller (3).

## Revendications

1. Système de régulation d'antiblocage pour des véhicules automobiles, consistant en : des capteurs (5, 6) inductifs, un régulateur d'ABS (3), qui reconnaît des états de surfreinage de roue à partir des signaux des capteurs et engendre des signaux de commande correspondants, et un modulateur de pression (1), qui sera incité par les signaux de commande à ajuster les pressions de freinage aux roues de véhicule, a chaque roue, cycliquement, trois phases d'ajustement de pression devenant parcourues, de sorte que, lors d'un surfreinage reconnu, chaque fois, une réduction de pression a lieu, lors d'une accélération de roue suffisante survenant à nouveau, un maintien de pression sera effectué, et, après une arrivée de la roue dans une plage de patinage ou de glissement stable, un établissement de pression a lieu à nouveau, jusqu'à ce qu'un surfreinage renouvelé déclenche à nouveau une phase de réduction de pression, et la vitesse de croissance de l'établissement de pression sera alors nettement agrandie, dans le cas où, l'établissement de pression, à l'intérieur d'un laps de temps TPAuf préalloué, n'a pas conduit à un surfreinage de la roue, _caractérisé en ce_, que le régulateur d'ABS (3) est pourvu d'un circuit auxiliaire (4) interne, additionnel, qui, à l'aide des décélérations de roue mesurées et des décélérations de référence de véhicule AREF calculées, adaptables aux données physiques, superpose de façon adaptée une modulation fine de pression aux modulations de pression normales, en ce que le circuit auxiliaire (4), pour chaque roue régulée, engendre un signal de maintien de pression, lorsque la décélération de roue est plus grande que la décélération de référence de véhicule augmentée d'une valeur de seuil DeltaA1, et engendre un signal de réduction de pression, lorsque la décélération de roue sera plus grande que la décélération de référence de véhicule augmentée d'une valeur de seuil DeltaA2, lors de DeltaA2 > DeltaA1, grâce à quoi, le régulateur d'ABS conserve ou même réduit déjà alors aussi la pression de freinage de la roue concernée, lorsque la vitesse de roue se trouve encore dans la plage de patinage ou de glissement stable, que le circuit auxiliaire (4) diffère toujours alors l'instant TS pour l'activation de la rampe de recherche, lors de tendance au blocage de roue faisant défaut, lorsque, durant l'établissement de pression, un signal de décharge de pression a été donné, et en ce que le circuit auxiliaire (4), en fonction de la décélération de référence de véhicule AREF atteinte, constamment, calcule une vitesse de croissance variable DeltaPSuch pour la rampe de recherche, la vitesse de croissance décroissant avec la décélération AREF augmentant.

2. Système de régulation d'antiblocage selon la revendication 1, caractérisé en ce, que le circuit auxiliaire (4) calcule les valeurs de seuil DeltaA1 et DeltaA2 en fonction de la décélération de référence de véhicule AREF calculée.

3. Système de régulation d'antiblocage selon les revendications 1 et 2, caractérisé en ce, que le circuit auxiliaire (4) calcule les valeurs de seuil DeltaA1 et DeltaA2, de façon additionnelle, en fonction de la vitesse de référence de véhicule VREF calculée, DeltaA1 et DeltaA2 croissant linéairement, ou progressivement, avec VREF.

4. Système de régulation d'antiblocage selon la revendication 1 à 3, caractérisé en ce, que cette pression de freinage sera mise en mémoire comme pression de référence, lors de laquelle la roue considérée montre une tendance au blocage, et en ce qu'un maintien de pression, malgré un franchissement de la valeur de seuil DeltaA1, ou une réduction de pression, malgré un franchissement de la valeur de seuil DeltaA2, seront seulement exécutés, lorsque, de façon additionnelle, est réalisé que la pression de freinage ajustée a déjà à nouveau atteint approximativement la pression de référence, ou bien a déjà franchi celle-ci.

5. Système de régulation d'antiblocage selon les revendications 1 à 4, caractérisé en ce, qu'un maintien de pression, malgré un franchissement de la valeur de seuil DeltaA1, ou une réduction de pression, malgré un franchissement de la valeur de seuil DeltaA2, seront alors exécutés seulement lorsque, de façon additionnelle, est réalisé qu'aucune mauvaise suppression est présente, donc que déjà un temps déterminé est écoulé depuis la dernière instabilité horizontale de roue reconnue.

6. Système de régulation d'antiblocage selon la revendication 1, caractérisé en ce, que l'agrandissement de TPAuf après une réduction de pression a lieu alors seulement lorsque, en même temps, la décélération de référence de véhicule AREF franchit une valeur de seuil minimale, de par exemple 0,3 g.

7. Système de régulation d'antiblocage selon les revendications 1 à 6, caractérisé en ce, que le circuit auxiliaire (4) est mis en application en fonction du logiciel sur le régulateur d'ABS (3).

Rückmeldesignale

PHBZ0          PHBZ1

P0, P1 bzw. prop. Signale

**2**

**4**                              **3**                        **1**

| Hilfsschaltung zur ABS-Feinregelung | Referenz-daten | ABS-Regler | Elektro-mechanisch-hydraulischer Druckmodulator |

Daten zur Feinreg.

**5**    **6**

S0     S1

Ansteuersignale

P0      P1

Fig. 1

EP 0 560 271 B1

Fig. 2

EP 0 560 271 B1

$$s0 = \frac{VF - V0}{VF}$$

Fig. 3

Fig. 4

Fig. 5

Fig. 6

Fig. 7

EP 0 560 271 B1

Fig. 8

Fig. 9

Fig. 10